# FASCICULE DE BREVET EUROPEEN

(11) **EP 0 690 295 B1**
(45) Date de publication et mention de la délivrance du brevet: **25.11.1998**
(21) Numéro de dépôt: 95401509.5
(22) Date de dépôt: 26.06.1995
(51) Int. Cl.: G01J 3/28

(54) **Caméra optoélectronique du type spectro-imageur ou spectro-photomètre, ensemble d'éléments photosensibles et fenêtre de protection pour une telle caméra et procédé pour les réaliser**
Optoelektronische Kamera für Spektralabbildungsgerät oder Spektralphotometer, lichtempfindliche Einheit und Schutzfenster für eine solche Kamera sowie Verfahren zum Ausführen einer solchen Anordnung
Optoelectronic camera of the spectral imager or spectral photometer type, light sensible elements and protection window for such a camera and method for carrying out such an arrangement

(30) Priorité: 30.06.1994 FR 9408085
(43) Date de publication de la demande: 03.01.1996
(73) Titulaire: AEROSPATIALE Société Nationale Industrielle, 75781 Paris Cédex 16 (FR)
(72) Inventeur: Cerutti, Maori, Guy, F-06150 Cannes-la-Bocca (FR); Chessel, Jean-Philippe, "les Lucioles", F-05210 Mandelieu (FR)
(74) Mandataire: Bonnetat, Christian

(56) Documents cités:
- EP-A- 0 023 149
- DD-A- 203 433
- DD-A- 281 664

## Description

La présente invention concerne une caméra optoélectronique du type spectro-imageur ou spectro-photomètre minimisant les images fantômes, ainsi qu'un système pour une caméra optoélectronique comportant un ensemble d'éléments photosensibles et un système pour une caméra optoélectronique comportant une fenêtre de protection pour une telle caméra et un procédé pour réaliser un tel ensemble d'éléments photosensibles et une telle fenêtre de protection.

On connaît déjà des caméras optoélectroniques comportant un système optique, un ensemble d'éléments photosensibles de type CCD disposé au foyer dudit système optique et une fenêtre transparente de protection disposée devant ledit ensemble d'éléments photosensibles.

De telles caméras sont de plus en plus utilisées et elles présentent l'avantage de fournir une image numérisée.

Par ailleurs, de telles caméras CCD du type spectro-imageur ou spectro-photomètre permettent l'analyse spectrale de la scène qu'elles observent. Dans ce cas, elles comportent un disperseur (réseau de diffraction, prisme, etc ...), par exemple introduit dans le système optique. Ainsi, le spectre de la scène imagée est focalisé sur l'ensemble d'éléments photosensibles, par exemple formés par une matrice ou une barrette.

Cependant, de telles caméras optoélectroniques présentent l'inconvénient d'engendrer ce que l'on appelle dans la technique des images fantômes, qui s'ajoutent à l'image de la scène. Il en résulte une erreur non négligeable de l'image principale, ce qui fausse l'exploitation de celle-ci, plus particulièrement en présence d'objets de luminence élevée.

Ces images fantômes sont engendrées par la réflexion de la lumière multispectrale incidente sur la face sensible de l'ensemble CCD, sur les deux faces de la fenêtre de protection, et sur la dernière face optique du système optique, dirigée vers ladite fenêtre de protection et vers ledit ensemble d'éléments photosensibles.

Ces images fantômes sont spatialement délocalisées par rapport à l'image observée et sont recentrées en d'autres points de l'ensemble des éléments photosensibles.

Pour tenter d'éliminer ces images fantômes, on a déjà pensé à déposer des revêtements antireflet sur les faces génératrices desdites images fantômes, à savoir la face photosensible de l'ensemble desdits éléments, les deux faces de la fenêtre de protection et la dernière face dudit système optique, dirigée vers ladite fenêtre de protection et ledit ensemble d'éléments photosensibles.

De tels revêtements antireflet sont par exemple constitués, de façon connue, par des produits à base d'oxyde de tungstène ou de fluorure de magnésium.

Si le spectre analysé par l'ensemble des éléments photosensibles est étendu (par exemple entre 400 et 1000 nm), la réalisation des revêtements antireflet à larges bandes n'est pas aisée. Par ailleurs, il est très difficilement possible d'obtenir des revêtements multicouches antireflet satisfaisants sur la face sensible dudit ensemble d'éléments photosensibles, notamment du fait que cette face sensible est constituée de silicium.

La présente invention a pour objet de remédier à ces inconvénients, en profitant de l'étalement spatial du spectre au niveau du détecteur.

A cette fin, selon l'invention, la caméra optoélectronique comportant un système optique, un ensemble d'éléments photosensibles de type CCD disposé au foyer dudit système optique, une fenêtre transparente de protection, par exemple en verre, disposée devant la face sensible dudit ensemble d'éléments photosensibles et un disperseur spectral permettant l'analyse spectrale de la scène observée par ladite caméra, est remarquable en ce que ladite face sensible dudit ensemble d'éléments photosensibles, dirigée vers ladite fenêtre de protection, est revêtue d'un revêtement monocouche ou multicouche de matière antireflet, dont l'épaisseur varie de façon continue en fonction de la longueur d'onde de la lumière reçue par ladite face sensible, parallèlement à l'axe de dispersion dudit disperseur.

On remarquera que la présente invention est particulièrement avantageuse. En effet, comme on ne sait optimiser ladite monocouche qu'à une seule longueur d'onde, on peut atteindre jusqu'à 40% de réflexion en dehors de la longueur d'onde de centrage. De plus, en ce qui concerne les revêtements multicouches, il est aujourd'hui impossible d'obtenir à la fois un faible facteur de réflexion et un large domaine spectral, ce que pallie l'invention.

Au contraire, selon l'invention, puisque l'épaisseur du revêtement antireflet déposé sur la face sensible dudit ensemble d'éléments photosensibles est continûment variable, on obtient, pour chaque point de ladite face sensible, une adaptation du revêtement antireflet à la longueur d'onde de la lumière arrivant audit point, cette adaptation étant continue sur ladite face.

On obtient ainsi un facteur de réflexion au plus égal à 1% dans un large domaine spectral, par exemple compris entre 400 et 1050 nm, avec un tel revêtement monocouche ou multicouche.

De préférence, afin d'éliminer encore plus les images fantômes, au moins l'une des faces, et de préférence les deux faces, de ladite fenêtre de protection sont également revêtues d'un revêtement monocouche ou multicouche de matière antireflet, dont l'épaisseur varie de façon continue en fonction de la longueur d'onde de la lumière reçue par ladite face, parallèlement à l'axe de dispersion dudit disperseur.

De préférence, l'épaisseur du revêtement déposé sur la face sensible dudit ensemble d'éléments photosensibles, ainsi que l'épaisseur du revêtement déposé sur les faces de la fenêtre de protection, sont telles que, en chaque point, le produit de ladite épaisseur par l'indice de réfraction de la matière antireflet est égal à un multiple impair du quart de la longueur d'onde de la lumière arrivant en ce point.

Par ailleurs, la présente invention concerne également un système pour une caméra optoélectronique comportant un ensemble d'éléments photosensibles permettant l'élimination des images fantômes dans une caméra optoélectronique du type spectro-imageur ou spectro-photomètre comportant un système optique, ledit ensemble d'éléments photosensibles de type CCD disposé au foyer dudit système optique, une fenêtre transparente de protection disposée devant ledit ensemble d'éléments photosensibles et un disperseur spectral permettant l'analyse spectrale de la scène donnée par ladite caméra. Cet ensemble d'éléments photosensibles est remarquable en ce que sa face, destinée à être dirigée vers ladite fenêtre de protection, est revêtue d'un revêtement monocouche ou multicouche de matière antireflet dont l'épaisseur varie en fonction de la longueur d'onde de la lumière reçue par ladite face, parallèlement à l'axe de dispersion du disperseur. L'invention concerne également un système pour une caméra optoélectronique comportant une fenêtre de protection telle que définie, dont l'une des faces, et de préférence les deux faces, sont revêtues d'un tel revêtement.

Ainsi, en tout point de ladite face sensible, l'épaisseur du revêtement antireflet est adaptée de façon précise à la longueur d'onde de la lumière frappant ce point. Il peut en être de même pour les deux faces de la fenêtre de protection.

La présente invention concerne également la réalisation dudit revêtement antireflet monocouche ou multicouche, qui est obtenue par évaporation-condensation ou pulvérisation cathodique sous vide d'une matière antireflet déposée sur ladite face photosensible dudit ensemble d'éléments photosensibles à travers un masque constitué par un disque rotatif pourvu d'une échancrure en forme de secteur de profil adapté ou un masque constitué par une plaque pourvue d'une échancrure en forme de trapèze, animée d'un mouvement de translation. Cette technique est également applicable aux revêtements sur la fenêtre.

Ainsi, lors de la rotation ou de la translation du masque, la surface photosensible de l'ensemble d'éléments photosensibles, notamment, est exposée de façon que le temps d'exposition augmente progressivement du centre vers la périphérie dudit masque.

Il en résulte que l'épaisseur de la couche du revêtement antireflet croît continûment du centre vers la périphérie du masque.

Les figures du dessin annexé feront bien comprendre comment l'invention peut être réalisée. Sur ces figures, des références identiques désignent des éléments semblables.

La figure 1 est une vue schématique illustrant la formation des images fantômes dans une caméra optoélectronique connue du type spectro-imageur ou spectro-photomètre.

La figure 2 illustre la disposition de l'image principale et des images fantômes sur la face photosensible de la caméra connue de la figure 1.

La figure 3 illustre schématiquement en vue de côté l'élément photosensible conforme à la présente invention, pourvu de son revêtement antireflet sur sa face sensible.

La figure 4 illustre schématiquement le procédé de formation dudit revêtement antireflet sur la face sensible de l'élément conforme à la présente invention dans le cas d'un masque en rotation.

La figure 5 montre plus particulièrement un masque mis en oeuvre dans le procédé illustré par la figure 4, ainsi que la disposition relative dudit ensemble d'éléments photosensibles.

La figure 6 montre un autre exemple de réalisation d'un masque selon l'invention.

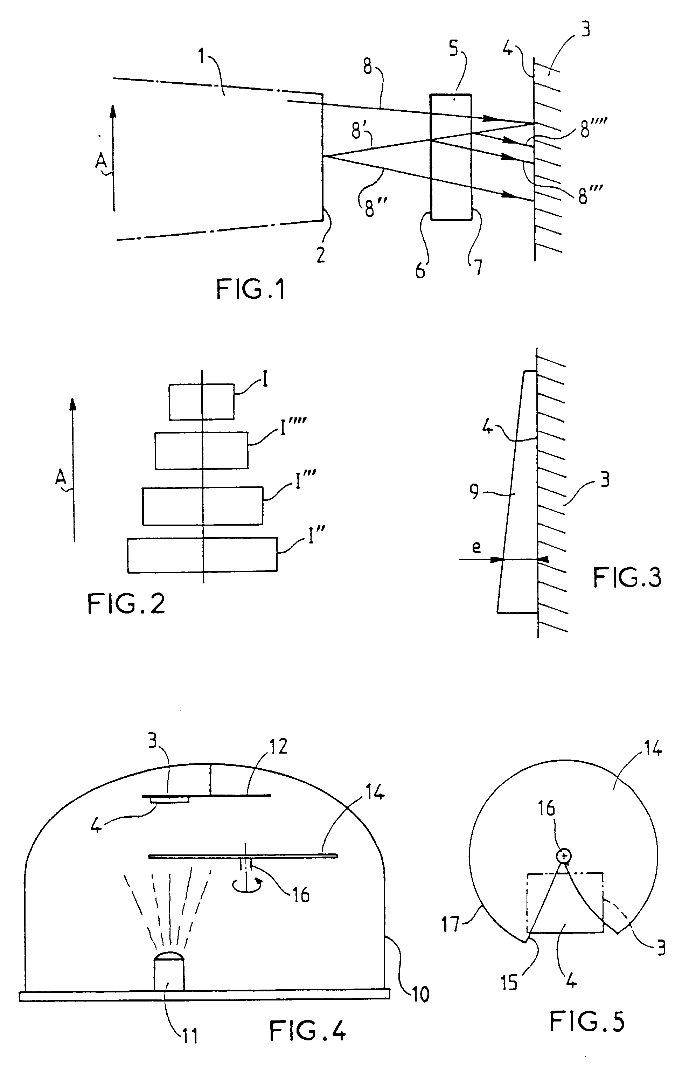

Sur la figure 1, on a représenté schématiquement et partiellement une caméra optoélectronique connue, du type spectro-imageur ou spectro-photomètre.

Cette caméra comporte un système optique 1 pourvu d'une face d'extrémité 2, ainsi qu'une matrice CCD 3, pourvue d'une face sensible 4, dirigée vers ladite face d'extrémité 2.

Entre le système optique 1 et la matrice CCD 3, est disposée une fenêtre de protection 5, constituée d'une lame de verre à faces parallèles 6 et 7.

Par ailleurs, dans le système optique 1, est incorporé un disperseur uniquement représenté par son axe de dispersion A.

Ainsi, lorsqu'un faisceau incident monospectral 8, sortant du système optique 1, atteint la face sensible 4, celle-ci réfléchit une partie dudit faisceau et ce faisceau réfléchi 8' est lui-même réfléchi partiellement en direction de la face sensible 4 par la face 2 du système optique 1 et par les faces 6 et 7 de la fenêtre de protection 5. Ces différents faisceaux réfléchis sont désignés par 8'', 8''' et 8''''.

Il en résulte, sur la face sensible 4 de la matrice CCD 3, en plus de l'image normale I, des images fantômes I'', I''' et I'''' (voir la figure 2).

Conformément à l'invention et comme cela est illustré schématiquement par la figure 3, pour éliminer les images fantômes I'', I''' et I'''', on revêt la surface sensible 4 de la matrice CCD 3 d'un revêtement monocouche ou multicouche de matière antireflet 9, dont l'épaisseur e varie de façon continue en fonction de la longueur d'onde de la lumière reçue par ladite face photosensible 4 et de l'indice de réfraction du matériau, parallèlement à l'axe de dispersion A dudit disperseur.

Comme indiqué ci-dessus, si l'indice de réfraction de la matière antireflet est égal à n, en chaque point du revêtement 9, l'épaisseur e de celle-ci est telle que le produit n x e est égal à un multiple impair du quart de la longueur d'onde de la lumière reçue en ce point.

Pour obtenir le revêtement 9 représenté sur la figure 3, on peut mettre en oeuvre le dispositif illustré schématiquement sur les figures 4 et 5.

Sur la figure 4, on a représenté une enceinte à vide 10 à l'intérieur de laquelle est disposé un creuset 11 contenant de la matière antireflet à déposer.

A la partie supérieure de l'enceinte 10, est prévu un support 12 sur lequel est fixée la matrice CCD 3, de façon que sa face sensible 4 soit dirigée vers le creuset 11.

De plus, entre le creuset 11 et la matrice CCD 3, est prévu un disque rotatif 14 pourvu d'une échancrure en forme de secteur 15 et d'un arbre 16, monté à rotation grâce à des moyens non représentés.

Ainsi, lorsque le creuset 11 est chauffé, de la matière antireflet est vaporisée et pulvérisée en direction de la face sensible 4 de la matrice CCD 3.

La matrice CCD 3 étant disposée de façon qu'elle soit masquée par le masque 14 sauf en regard de l'échancrure 15, l'épaisseur de la matière antireflet pulvérisée se condensant en un point de la face sensible 4 (qui est fonction du temps d'exposition de ce point photosensible imposé par l'échancrure 15), peut avoir la valeur désirée. Il en résulte une distribution d'épaisseur, croissant de l'arbre 16 vers la périphérie 17 du masque 14, comme illustré sur la figure 3.

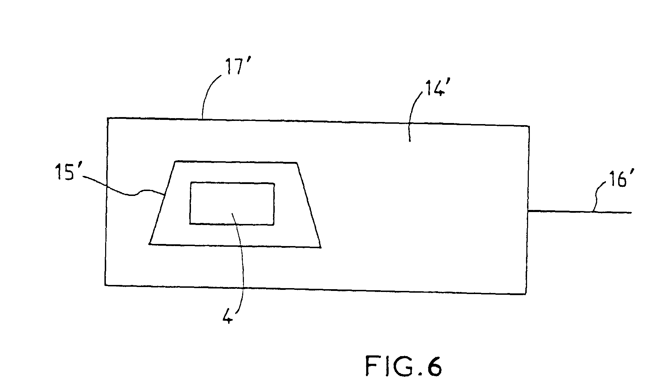

Sur la figure 6, on a montré un autre exemple de réalisation d'un masque 14' pourvu d'une échancrure 15' en forme de trapèze, pratiquée dans une plaque 17', pouvant être animée d'un mouvement de translation suivant l'axe 16'.

Comme mentionné ci-dessus, afin d'améliorer encore plus l'élimination des images fantômes I'', I''' et I'''', il peut être avantageux de revêtir au moins l'une des faces 6 et 7 de la fenêtre 5, et de préférence les deux faces 6 et 7 de ladite fenêtre, d'un revêtement monocouche ou multicouche (non représenté) de matière antireflet, dont l'épaisseur varie de façon continue en fonction de la longueur d'onde de la lumière reçue par ladite face, parallèlement à l'axe de dispersion (A) dudit disperseur. Un tel revêtement peut être obtenu de la façon décrite ci-dessus en ce qui concerne le revêtement 9 des éléments photosensibles 3.

## Revendications

1. Caméra optoélectronique du type spectro-imageur ou spectro-photomètre comportant un système optique (1), un ensemble d'éléments photosensibles (3) de type CCD disposé au foyer dudit système optique, une fenêtre transparente de protection (5) disposée devant la face sensible (4) dudit ensemble d'éléments photosensibles (3) et un disperseur spectral (1) permettant l'analyse spectrale de la scène observée par ladite caméra,
caractérisée en ce que ladite face sensible (4) dudit ensemble d'éléments photosensibles (3), dirigée vers ladite fenêtre de protection (5), est revêtue d'un revêtement monocouche ou multicouche (9) de matière antireflet, dont l'épaisseur (e) varie de façon continue en fonction de la longueur d'onde de la lumière reçue par ladite face sensible, parallèlement à l'axe de dispersion dudit disperseur (A).

2. Caméra optoélectronique selon la revendication 1,
caractérisée en ce qu'au moins l'une des faces (6, 7) de ladite fenêtre de protection (5) est également revêtue d'un revêtement monocouche ou multicouche de matière antireflet, dont l'épaisseur varie de façon continue en fonction de la longueur d'onde de la lumière reçue par ladite face, parallèlement à l'axe de dispersion dudit disperseur (A).

3. Caméra optoélectronique selon la revendication 2,
caractérisée en ce que les deux faces (6, 7) de ladite fenêtre de protection (5) sont également revêtues d'un tel revêtement monocouche ou multicouche antireflet.

4. Système pour une caméra optoélectronique de type spectro-imageur ou spectrophomètre, ledit système comportant :
- un système optique (1)
- un ensemble d'éléments photosensibles (3) de type CCD disposé au foyer dudit système optique (1) ;
- une fenêtre transparente de protection (5) disposée devant ledit ensemble d'éléments photosensibles ; et
- un disperseur spectral (1) permettant l'analyse spectrale de la scène donnée par la caméra,
caractérisé en ce que la face (4) dudit ensemble d'éléments photosensibles (3), dirigée vers ladite fenêtre de protection (5), est revêtue d'un revêtement monocouche ou multicouche de matière antireflet (9) dont l'épaisseur (e) varie en fonction de la longueur d'onde de la lumière reçue par ladite face, parallèlement à l'axe de dispersion du disperseur (A).

5. Système pour une caméra optoélectronique de type spectro-imageur ou spectrophomètre, ledit système comportant :
- un système optique (1)
- un ensemble d'éléments photosensibles (3) de type CCD disposé au foyer dudit système optique (1) ;
- une fenêtre transparente de protection (5) disposée devant ledit ensemble d'éléments photosensibles ; et
- un disperseur spectral (1) permettant l'analyse spectrale de la scène donnée par la caméra,
caractérisé en ce qu'au moins l'une des faces (6, 7) de ladite fenêtre de protection (5) est revêtue d'un revêtement monocouche ou multicouche de matière antireflet, dont l'épaisseur varie de façon continue en fonction de la longueur d'onde de la lumière reçue par ladite face, parallèlement à l'axe de dispersion dudit disperseur (A).

6. Système selon la revendication 5,
caractérisé en ce que les deux faces (6, 7) de ladite fenêtre de protection (5) sont revêtues d'un tel revêtement monocouche ou multicouche antireflet.

7. Procédé pour la réalisation du système spécifié sous l'une des revendications 4 à 6,
caractérisé en ce que l'on évapore sous vide une matière antireflet et en ce qu'on la pulvérise sur ladite face photosensible (4) dudit ensemble d'éléments photosensibles (3) ou les faces (6, 7) de ladite fenêtre de protection (5), à travers un masque.

8. Procédé selon la revendication 7,
caractérisé en ce que ledit masque est constitué par un disque rotatif (14) pourvu d'une échancrure (15) en forme de secteur.

9. Procédé selon la revendication 7,
caractérisé en ce que ledit masque est constitué par une plaque (17') pourvue d'une échancrure (15') en forme de trapèze, animée d'un mouvement de translation (16').

## Patentansprüche

1. Optoelektronische Kamera für ein Spektralabbildungsgerät oder Spektralphotometer mit einem optischen System (1), einer lichtempfindlichen Einheit (3) des CCD-Typs, die im Brennpunkt des optischen Systems angeordnet ist, einem transparenten Schutzfenster (5) vor der empfindlichen Fläche (4) der lichtempfindlichen Einheit (3) und einer Spektraldispersionsvorrichtung (1) zur Spektralanalyse der von der Kamera beobachteten Szene,
dadurch gekennzeichnet, daß die empfindliche Fläche (4) der lichtempfindlichen Einheit (3), die zum Schutzfenster (5) gerichtet ist, mit einem Ein- oder Mehrschichtbelag (9) aus einem Antireflexmaterial überzogen ist, dessen Dicke (e) sich entsprechend der Wellenlänge des an die empfindliche Fläche gelangenden Lichts parallel zur Dispersionsachse der Dispersionsvorrichtung (A) kontinuierlich ändert.

2. Optoelektronische Kamera nach Anspruch 1,
dadurch gekennzeichnet, daß mindestens eine der Flächen (6, 7) des Schutzfensters (5) ebenfalls mit einem Ein- oder Mehrschichtbelag aus einem Antireflexmaterial versehen ist, dessen Dicke sich entsprechend der Wellenlänge des an die Fläche gelangenden Lichts parallel zur Dispersionsachse der Dispersionsvorrichtung (A) kontinuierlich ändert.

3. Optoelektronische Kamera nach Anspruch 2,
dadurch gekennzeichnet, daß die beiden Flächen (6, 7) des Schutzfensters (5) ebenfalls mit einem derartigen Ein- oder Mehrschicht-Antireflexbelag versehen sind.

4. System für eine optoelektronische Kamera eines Spektralabbildungsgeräts oder Spektralphotometers, wobei das System umfaßt :
Ein optisches System (1);
eine lichtempfindliche CCD-Einheit (3), die im Brennpunkt des optischen Systems (1) angeordnet ist;
ein transparentes Schutzfenster (5) vor der lichtempfindlichen Einheit; und
eine Spektraldispersionsvorrichtung (1) zur Spektralanalyse der von der Kamera beobachteten Szene,
dadurch gekennzeichnet, daß die Fläche (4) der lichtempfindlichen Einheit (3), die zum Schutzfenster (5) gerichtet ist, mit einem Ein- oder Mehrschichtbelag aus einem Antireflexmaterial (9) versehen ist, dessen Dicke (e) sich entsprechend der Wellenlänge des an die Fläche gelangenden Lichts parallel zur Dispersionsachse der Dispersionsvorrichtung (A) ändert.

5. System für eine optoelektronische Kamera eines Spektralabbildungsgeräts oder Spektralphotometers, wobei das System umfaßt :
Ein optisches System (1);
eine lichtempfindliche CCD-Einheit (3), die im Brennpunkt des optischen Systems (1) angeordnet ist;
ein transparentes Schutzfenster (5) vor der lichtempfindlichen Einheit; und
eine Spektraldispersionsvorrichtung (1) zur Spektralanalyse der von der Kamera beobachteten Szene,
dadurch gekennzeichnet, daß mindestens eine der Flächen (6, 7) des Schutzfensters (5) mit einem Ein- oder Mehrschichtbelag aus Antireflexmaterial versehen ist, dessen Dicke sich entsprechend der Wellenlänge des an die Fläche gelangenden Lichts parallel zur Dispersionsachse der Disperionsvorrichtung (A) kontinuierlich ändert.

6. System nach Anspruch 5,
dadurch gekennzeichnet, daß die beiden Flächen (6, 7) des Schutzfensters (5) mit einem derartigen Ein- oder Mehrschicht-Antireflexbelag versehen sind.

7. Verfahren zur Herstellung des unter einem der Ansprüche 4 bis 6 spezifizierten Systems,
dadurch gekennzeichnet, daß ein Antireflexmaterial im Vakuum verdampft wird, und dadurch, daß dieses auf der lichtempfindlichen Fläche (4) der lichtempfindlichen Einheit (3) oder den Flächen (6, 7) des Schutzfensters (5) über eine Maske zerstäubt wird.

8. Verfahren nach Anspruch 7,
dadurch gekennzeichnet, daß die Maske aus einer Drehscheibe (14) mit einem sektorförmigen Ausschnitt (15) besteht.

9. Verfahren nach Anspruch 7,
dadurch gekennzeichnet, daß die Maske aus einer Platte (17') mit einem trapezförmigen Ausschnitt (15'), der eine geradlinige Bewegung (16') aufgegeben wird, besteht.

## Claims

1. Optoelectronic camera of the spectral imager or spectrophotometer type, including an optical system (1), a CCD-type set of photosensitive elements (3) which is arranged at the focus of the said optical system, a transparent protective window (5) arranged in front of the sensitive face (4) of the said set of photosensitive elements (3) and a spectral disperser (1) allowing spectral analysis of the scene observed by the said camera, characterized in that the said sensitive face (4) of the said set of photosensitive elements (3), which face points towards the said protective window (5), is coated with a monolayer or multilayer coating (9) of antireflection material whose thickness (e) varies continuously as a function of the wavelength of the light received by the said sensitive face, parallel to the dispersion axis of the said disperser (A).

2. Optoelectronic camera according to Claim 1, characterized in that at least one of the faces (6, 7) of the said protective window (5) is also coated with a monolayer or multilayer coating of antireflection material whose thickness varies continuously as a function of the wavelength of the light received by the said face, parallel to the dispersion axis of the said disperser (A).

3. Optoelectronic camera according to Claim 2, characterized in that both of the faces (6, 7) of the said protective window (5) are also coated with such a monolayer or multilayer antireflection coating.

4. System for an optoelectronic camera of the spectral imager or spectrophotometer type, the said system including:
- an optical system (1),
- a CCD-type set of photosensitive elements (3) which is arranged at the focus of the said optical system (1);
- a transparent protective window (5) arranged in front of the said set of photosensitive elements; and
- a spectral disperser (1) allowing spectral analysis of the scene given by the camera,
characterized in that face (4) of the said set of photosensitive elements (3) which is pointed towards the said protective window (5) is coated with a monolayer or multilayer coating of antireflection material (9) whose thickness (e) varies as a function of the wavelength of the light received by the said face, parallel to the dispersion axis of the disperser (A).

5. System for an optoelectronic camera of the spectral imager or spectrophotometer type, the said system including:
- an optical system (1),
- a CCD-type set of photosensitive elements (3) which is arranged at the focus of the said optical system (1);
- a transparent protective window (5) arranged in front of the said set of photosensitive elements; and
- a spectral disperser (1) allowing spectral analysis of the scene given by the camera characterized in that at least one of the faces (6, 7) of the said protective window (5) is coated with a monolayer or multilayer coating of antireflection material, whose thickness varies continuously as a function of the wavelength of the light received by the said face, parallel to the dispersion axis of the said disperser (A).

6. System according to claim 5, characterized in that both of the faces (6, 7) of the said protective window (5) are coated with such a monolayer or multilayer antireflection coating.

7. Method for producing the system which is specified under one of Claims 4 to 6, characterized in that an antireflection material is vacuum-evaporated and in that it is projected onto the said photosensitive face (4) of the said set of photosensitive elements (3) or the faces (6, 7) of the said protective window (5), through a mask.

8. Method according to Claim 7, characterized in that the said mask consists of a rotary disc (14) provided with a cutout (15) in the shape of a sector.

9. Method according to Claim 7, characterized in that the said mask consists of a plate (17') which is provided with a trapezoidal cutout (15') and to which a translational movement is imparted (16').
